Europäisches Patentamt

European Patent Office

Office européen des brevets

(19)

(11) Veröffentlichungsnummer: **0 014 241**
**B1**

(12) **EUROPÄISCHE PATENTSCHRIFT**

(45) Veröffentlichungstag der Patentschrift: **02.05.84**

(21) Anmeldenummer: **79104706.1**

(22) Anmeldetag: **27.11.79**

(51) Int. Cl.³: **G 05 D 3/20, H 02 P 5/16,**
**G 05 B 19/23, G 05 B 7/02**

(54) Verfahren zur geregelten Führung eines Gleichstromantriebes in eine Zielposition und Schaltungsanordnung zur Durchführung des Verfahrens.

(30) Priorität: **05.02.79 DE 2904275**

(43) Veröffentlichungstag der Anmeldung:
**20.08.80 Patentblatt 80/17**

(45) Bekanntmachung des Hinweises auf die Patenterteilung:
**02.05.84 Patentblatt 84/18**

(84) Benannte Vertragsstaaten:
**CH DE FR GB IT NL**

(56) Entgegenhaltungen:
**DE - A - 2 007 188**
**DE - A - 2 264 323**
**DE - B - 1 556 326**

**ELEKTRONIK Nr. 12, 1974 Schaltungspraxis. P. SCHARNWEBER "Computerorientierte Motorsteuerung" Seiten 483 bis 484**

(73) Patentinhaber: **OLYMPIA WERKE AG**
**Postfach 960 Olympiastrasse**
**D-2940 Wilhelmshaven (DE)**

(72) Erfinder: **Bettin, Hubertus**
**Kastanienallee 74**
**D-3300 Braunschweig (DE)**
Erfinder: **Bornemann, Rainer**
**Nieland 20**
**D-3176 Meinersen (DE)**

Courier Press, Leamington Spa, England.

Verfahren zur geregelten Führung eines Gleichstromantriebes in eine Zielposition und
Schaltungsanordnung zur Durchführung des Verfahrens

Die Erfindung betrifft ein Verfahren zur geregelten Führung eines Gleichstromantriebes in eine Zielposition nach dem Oberbegriff des Patentanspruchs 1 sowie eine Schaltungsanordnung zur Durchführung des Verfahrens.

Verfahren und Schaltungsanordnungen verschiedener Art, die einen Motor durch Abbremsung in die Nähe der Zielposition bringen, sind bereits bekannt. Um den Motor jedoch mit hoher Genauigkeit in die Zielposition zu bringen, müssen in den letzten Bewegungsphasen besondere Maßnahmen ergriffen werden. Solche Maßnahmen bestehen beispielsweise darin, den Motor nach Abbremsung im Schleichgang in die Zielposition einlaufen zu lassen oder die Bremsverzögerung einer vorgegebenen Charakteristik anzunähern.

Im ersten Falle darf für den Schleichgang nur eine sehr geringe Geschwindigkeit gewählt werden, um bei dem schließlich erfolgenden Stoppbefehl in der Zielposition ein Überschwingen zu vermeiden. Da zudem der Schleichgang frühzeitig einsetzen muß, um von Last- und Reibungsunterschieden unabhängig zu sein, wird verhältnismäßig lange Zeit zum Erreichen der Zielposition benötigt. Im zweiten Falle ist ein großer Schaltungsaufwand insbesondere deshalb erforderlich, weil digitale Signale in analoge Signale umgewandelt werden müssen, damit eine Annäherung an die analogen Verzögerungscharackteristiken möglich ist.

Eine Lösung der letztgenannten Art ist in der DE—OS 22 64 323 vorgeschlagen worden, bei der aus gleichmäßig beabstandeten Wegmarken ein Takt abgeleitet wird, der zum Gewinnen einer dem jeweils verbleibenden Restweg analogen Größe dient. Daraus wird emittelt, ob das Verhältnis der Istgeschwindigkeit zum Restweg während der Bremsung gleich einem vorgegebenen Verhältnis mit linearer Geschwindigkeitsabnahme ist. Durch Bremsung, Freilauf oder Beschleunigung werden Abweichungen korrigiert.

Dieses Verfahren ist auf die Genauigkeit von Konstantstromquellen angewiesen. Da es zudem nur eine lineare Verzögerungscharakteristik zu realisieren vermag, ist die Geschwindigkeit des Motors in der Zielposition nicht sanft auslaufend sondern hat wiederum ein Überschwingen, zumindest aber ein ruckartiges Anhalten zur Folge.

Der Erfindung liegt die Aufgabe zugrunde, ein Verfahren und eine Schaltungsanordnung zu schaffen, mit denen ein Gleichstrommotor schnell und sicher in einer Zielposition zum Stillstand gebracht werden kann.

Diese Aufgabe wird erfindungsgemäß durch die im Kennzeichen des Patentanspruchs 1 angegebenen Merkmale gelöst.

Aus der DE—A—12 39 388 ist es an sich bekannt, mit einer abklingenden Führungsgröße in eine Sollposition einzufahren. Hierzu ist ein Nachführsystem mit einem eine Ansprechschwelle enthaltenden Regelkreis vorgesehen, in den zusätzlich periodische Impulse mit abklingender Amplitude eingeführt und zur Motorspeisespannung hinzuaddiert werden. Dadurch wird die Motorspeisespannung, die unterhalb der Ansprechschwelle nicht mehr zur Überwindung der Reibung ausreicht, soweit angehoben, daß der Motor in die Sollstellung einläuft. Bei dieser Lösung erreicht der Antrieb eine reibungsbedingte Ruheposition vor der eigentlichen Sollposition und läuft dann schrittweise bis in die Sollposition weiter. Es wird deshalb eine verhältnismäßig lange Zeit zum Ereichen der Sollposition benötigt.

Die Vorteile des erfindungsgemäßen Verfahrens sind insbesondere darin zu sehen, daß der Gleichstrommotor die jeweils vorgesehene Zielposition schnell erreicht und ein sanftes Einlaufen und Anhalten in der Zielposition erfolgt. Dabei ist dieses Verfahren ohne komplizierte schaltungstechnische Maßnahmen, wie z. B. Digital/Analog-Umwandlungen, durchführbar. Daneben weist es den Vorteil rein digitaler Steuerbarkeit auf, was insbesondere bei einem Einsatz in von Mikroprozessoren gesteuerten Maschinen von Bedeutung ist.

Eine Schaltungsanordnung zur Durchführung des erfindungsgemäßen Verfahrens ist in den Merkmalen des Patentanspruchs 6 angegeben.

Der Vorteil dieser Schaltungsanordnung ist insbesondere darin zu sehen, daß sie bei geringem Schaltungsaufwand mit rein digitalen Schaltungselementen auskommt. Der einfache Aufbau gewährleistet eine geringe Stör- und Fehleranfälligkeit.

Weitere vorteilhafte Ausgestaltungen der Erfindung sind den Unteransprüchen sowie dem nachfolgend in Verbindung mit den Zeichnungen beschriebenen Ausführungsbeispiel zu entnehmen. Es zeigen:

Figur 1 das Blockschaltbild eines Ausführungsbeispieles der Erfindung,

Figur 2 eine detaillierte Darstellung der Blöcke im Ausführungsbeispiel der Figur 1.

Figuren 3 bis 6 Kurvendarstellungen und

Figur 7 eine Variante zu Figur 2.

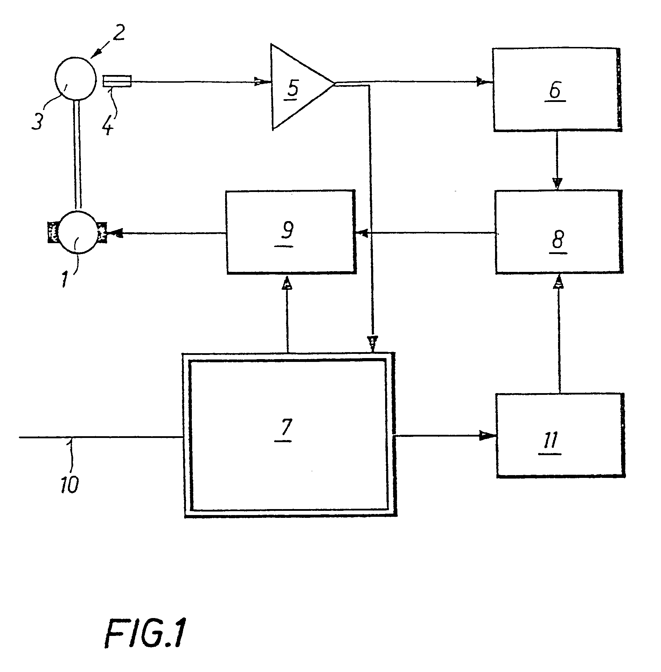

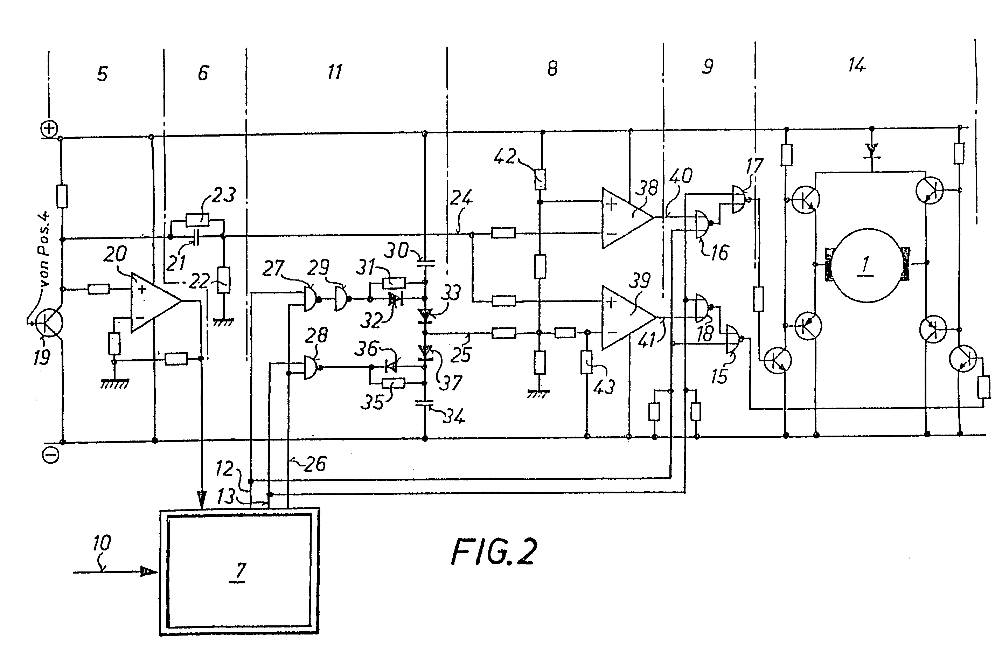

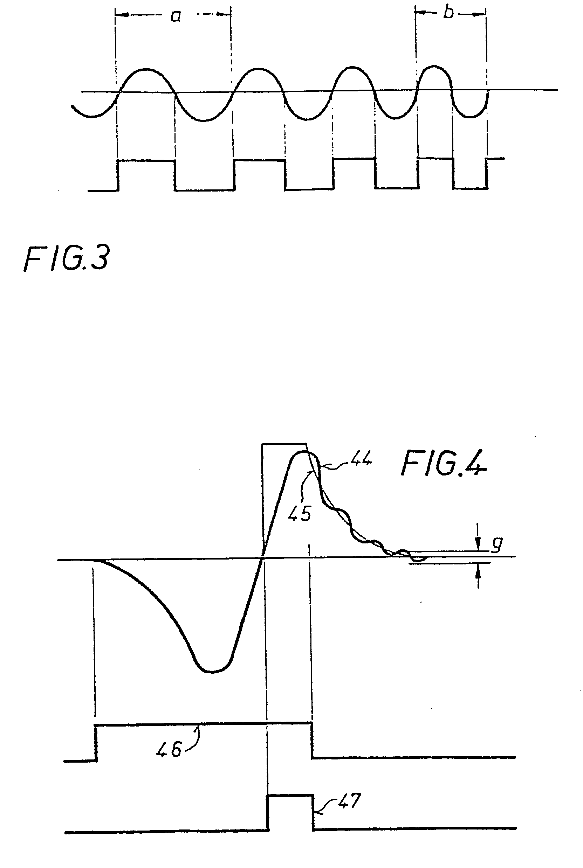

Um einen Gleichstrommotor 1 (Figur 1) um einen definierten Winkel in einer der beiden möglichen Richtungen—im folgenden Vorwärtsrichtung genannt—zu verdrehen und in der Sollposition exakt zum Stillstand zu bringen, wird einer Steuerung 7 der Schaltungsanordnung, die auch von einem Mikroprozessor gebildet sein kann, die Größe des geforderten Winkelweges sowie die Drehrichtung über eine Eingabeleitung 10 angegeben. Die Steuerung 7 gibt die Drehrichtungsanweisung an einen Steuerschalter 9 aus, der die entsprechende Bestromung an die Wicklungen des Motors 1 durchschaltet.

Der Motor 1 ist mit einem Sensor 2 gekoppelt, durch den eine volle Motrumdrehung in eine Anzahl meßbarer Teilwinkel—im folgenden Schritte genannte—aufgelöst ist und der für jeden Schritt ein Spannungssignal mit sinusförmigem Verlauf an die Schaltungsanordnung abgibt. Ein solcher, z. B. aus induktivem Geber 3 und Empfänger 4 bestehender Sensor 2 gehört zum bekannten Stand der Technik und wird deshalb hier nicht näher beschrieben. Auch sind neben Spannungssignalen mit sinus- und sinusähnlichem Verlauf solche mit trapezförmigem und dreieckesförmigem Verlauf usw. zur Realisierung der Erfindung geeignet.

Die vom Sensor 2 gelieferte, in diesem Beispiel also sinus-förmige Spannung wird in einer nachfolgenden Schaltung 5 verstärkt, und Taktsignale werden aus der Sensorspannung gewonnen, deren Taktabstand von den Null-Durchgängen der Sensorspannung bestimmt wird. Dieses Taktsignal wird der Steuerung 7 zugeführt. Die Steuerung 7 ermittelt in an sich bekannter Weise aus dem geforderten Winkelweg anhand der von der Sensorspannung abgelieteten Taktsignale—beispielsweise durch Abwärtszählen eines mit der Anzahl der zurückzulegenden Schritte gesetzten Zählers—, wass die Hälfte des geforderten Winkelweges durchlaufen ist. Die bis dahin an den Wicklungen des Motors 1 anliegende Bestromung in Vorwärtsrichtung wird nun auf Anweisung der Steuerung 7 vom Steuerschalter 9 abgeschaltet, und eine Bestromung in Rückwärtsrichtung wird durchgeschaltet. Der Motor wird also von voller Beschleunigung auf volle Bremsung umgeschlatet.

Nach Umkehrung der Bestromungsrichtung wird durch Vergleich der von der Sensorspannung abgeleiteten Taktsignale, deren Länge der Winkelgeschwindigkeit des Motors 1 proportional ist, mit dem internen Takt der digitalen Steuerung 7 von dieser überwacht, wann der Motor eine vorbestimmt Grenzgeschwindigkeit erreicht. Da durch Halbieren des geforderten Winkelweges die Größe des Bremsweges gleich der des Beschleunigungsweges angesetzt worden war, der Bremsweg aber durch mechanische Einflüsse—z. B. Reibung—verkürzt wird, würde der Motor 1 vor der angestrebten Sollposition zum Stillstand kommen. Um das zu vermeiden, wird von der Steuerung 7 bei Erreichen der "unteren Winkelgeschwindigkeit" das Abschalten der Rückwärtsbestromung und das Durchschalten eines kurzen Vorwärtsbestromungs-Impulses veranlaßt, um den Motor auf dieser vorbestimmten Grenzgeschwindigkeit zu halten. Diese Vorwärtsbestromungs-Impulse werden, ebenso wie eventuell erforderliche Rückwärtsbestromungs-Impulse, solange wiederholt, bis von der Steuerung 7 durch Vergleich der geforderten Sollstellung mit der Iststellung des Motors 1 festgestellt wird, daß sich der Motor um einen fest vorgegebenen Winkel, beispielsweise um den einem halben Schritt entsprechenden Winkel, vor der Sollposition entfernt befindet.

Um den Motor 1 mit dem Bremsvorgang möglichst dicht an die Sollstellung heranzuführen und die Häufigkeit der Impulsbestromung möglichst gering zu halten, können gegebenenfalls vorhandene konstante Reibungswerte dadurch berücsichtigt werden, daß die Bestromung in Rückwärtsrichtung um einen festen Betrag nach der Hälfte des geforderten Winkelweges angelegt wird.

Befindet sich der Motor 1 nunmehr um den fest vorgegebenen Winkel von der Sollposition entfernt, wird von der Steuerung 7 durch ein entsprechendes Signal eine Schaltung 11 zur Erzeugung einer Regelspannung freigegeben, deren Ausgang einer Spannungs-Vergleichsschaltung 8 zugeführt wird. Diese Regelspannung hat einen abklingenden Verlauf und entspricht einem Bewegungsverlauf, der den Motor 1 in idealer Weise in die Sollposition und Ruhestellung führen würde. Sie stellt somit eine Bewegungs-Sollkurve dar.

Die zweite der Spannungs-Vergleichsschaltung 8 zugeführte Spannung wird von einem Differenzierglied 6 geliefert, von dem die vom Sensor 2 kommende sinusförmige Spannung differenziert und zu einem proportionalen Anteil der Sensorspannung hinzuaddiert wird. Diese Summenkurve, die somit einen PD-Verlauf hat, stellt die Augenblicksgeschwindigkeit und Position des Motors 1 dar.

In der Spannungs-Vergleichsschaltung 8 wird die von der Schaltung 11 gelieferte Regelspannung mit der vom Differenzierglied 6 kommenden Summenspannung verglichen. In Abhängigkeit von der Spannungsdifferenz wird der Steuerschalter 9, statt direkt von der Steuerung 7, nunmehr vom Ausgang der Spannungs-Vergleichsschaltung 8 zur Durchschaltung von Vorwärts- oder Rückswärtsbestromung an den Motor 1 veranlaßt, und zwar wird der Motor 1 in Vorwärtsrichtung bestromt, wenn die Summenspannung kleiner als die Regelspannung ist und in Rückwärtsrichtung, wenn sie größer als die Regelspannung ist. Der Motor 1 wird auf diese Weise mit immer kleiner werdenden Abweichungen von der Bewegungs-Sollkurve (Regelkurve) in die Endstellung geführt.

Das in Figure 1 dargestellte Blockschaltbild kann schaltungsmäßig nach Figur 2 realisiert werden. Hiernach gibt die Mikroprozessor-Steuerung 7 über eine der Leitungen 12 für Vorwärts-Drehrichtung oder 13 für Rückwärts-Drehrichtung ein Steuersignal an den Steuerschalter 9, der über eine Gruppe von NOR-Gattern die aus dem Stand der Technik bekannte Polwendeschaltung 14 zur Durchschaltung des Betriebsstromes an den Motor 1 in der befohlenen Drehrichtung veranlaßt. Wird beispielsweise ein Vorwärts-Steuersignal auf Leitung 12 von der Steuerung 7 an den Steuerschalter 9 gegeben, so bewirkt das NOR-Gatter 15, daß die Rückwärts-Bestromung aus der Spannungsvergleichsschaltung 8 gesperrt wird, während NOR-Gatter 16 über NOR-Gatter 17 die Durchschaltung der Vorwärts-Bestromung veranlaßt. Umgekehrt bewirkt NOR-Gatter 17 bei Anliegen eines Rückwärts-Steuer-

# 0 014 241

signals auf Leitung 13 die Sperrung der Vorwärts-Bestromung und NOR-Gatter 18 über NOR-Gatter 15 das Durchschalten der Rückwärts-Bestromung.

Durch den in Figur 1 gezeigten, mit der Motorbewegung gekoppelten Sensor 2 wird die bereits beschriebene wegproportionale sinusförmige Sensorspannung erzeugt und an die Verstärkerschaltung 5 geliefert, von der die Signale mittels eines Transistors 19 verstärkt und an einen Operationsverstärker 20 geleitet werden, der daraus das von den Null-Durchgängen der Sensorspannung abhängige Taktsignal bildet und an die Steuerung 7 abgibt. Das verstärkte Sensor-Signal gelangt außerdem an das Differenzierglied 6, das aus einem RC-Glied 21, 22 mit einem dem Kondensator 21 parallel geschalteten Widerstand 23 beseht. Hier wird die wegproportionale Sensor-Spannung in eine geschwindigkeitsabhängige Spannung umgesetzt und zu einem über den Widerstand 23 kommenden proportionalen Anteil hinzuaddiert. Die so gewonnene Summenspannung mit PD-Verlauf wird an einen ersten Eingang 24 der Spannungs-Vergleichsschaltung 8 angelegt.

An einen zweiten Eingang 25 der Spannungs-Vergleichsschaltung 8 wird eine Regelspannung angelegt, wenn von der Steuerung 7 über einen Ausgang 26 ein entsprechendes Einschaltsignal an die Schaltung 11 zur Erzeugung der Regelspannung ausgegeben wird. Dem Einschaltsignal folgt kurz darauf (im Abstand von z. B. 5 ms) die Abschaltung des auf einer der Leitungen 12 oder 13 anliegenden Drehrichtungssignals. Dieses Einschaltsignal wird in der Schaltung 11 zwei NAND-Gattern 27 und 28 zugeführt, die jeweils einen zweiten Eingang für die auf Leitungen 12 bzw. 13 ausgegebenen Steuersignale für Vorwärts- bzw. Rückwärts-Drehrichtung aufweisen. Liegt z. B. am NAND-Gatter 27 das Vorwärts-Steuersignal über Leitung 12 an und wird das Einschaltsignal auf Leitung 26 angelegt, so wird über einen Inverter 29 veranlaßt, daß die den Motor 1 aus der Vorwärts-Drehrichtung in die Ruhestellung führende Regelspannung, die von der aus Kondensator 30, Widerstand 31 und Diode 32 bestehenden Schaltung erzeugt wird, über eine Entkopplungsdiode 33 an den zweiten Eingang 25 der Spannungs-Vergleichsschaltung 8 gelangt. Umgekehrt bewirkt ein am NAND-Gatter 28 anliegendes Rückwärts-Steuersignal zusammen mit dem Einschaltsignal auf Leitung 26, daß die den Motor 1 aus der Rückwärts-Drehrichtung in die Ruhestellung führende Regelspannung, die von der aus Kondensator 34, Widerstand 35 und Diode 36 bestehenden Schaltung erzeugt wird, über eine Entkopplungsdiode 37 an den zweiten Eingang 25 der Spannungs-Vergleichsschaltung 8 gelangt.

In der Spannungsvergleichsschaltung 8 wird mit Hilfe zweier Operationsverstärker 38, 39 ein Vergleich zwischen der vom Differenzierglied 6 auf Leitung 24 anliegenden Summenspannung und der auf Leitung 25 anliegenden Regelspannung durchgeführt und, in Abhängigkeit von der Spannungsdifferenz, entweder auf Ausgang 40 ein Steuersignal zur Durchschaltung einer Vorwärtsbestromung oder auf Ausgang 41 ein Steuersignal zur Durchschaltung einer Rückwärtsbestromung an den Steuerschalter 9 ausgegeben. Da kurz nach anliegen des Einschaltsignals auf Leitung 26 von der Steuerung 7 das auf einer der Leitungen 12 oder 13 anliegende Drehrichtungssignal abgeschaltet worden ist, wird der Steuerschalter 9 ausschließlich von den Ausgangssignalen der Spannungs-Vergleichsschaltung 8 gesteuert.

Obgleich der Motor mit immer kleiner werdenden Abweichungen von der Regelspannungs-Kurve in die Ruhestellung geführt worden ist, wird ein—allerdings sehr schwaches—Schwingverhalten un die Sollposition bestehen bleiben, das u. a. durch Rauschen der Verstärkerelemente hervorgerufen wird. Dieses Schwingen ist zwar nicht mehr durch eine Stellungsveränderung des Motors 1 wahrnehmbar, es äußert sich aber durch ein störendes Brummgeräusch. Um das zu vermeiden, ist durch Widerstände 42 bzw. 43 in der Spannungs-Vergleichsschaltung 8 eine Einstelltoleranz vorgegeben, innerhalb derer die Regelung unterdrückt wird. Tritt der Motor in diesen—z. B. $\pm0,02$ mm betragenden—Bereich ein, so werden auf den Ausgängen 40, 41 der Spannungs-Vergleichsschaltung 8 keine Signale mehr an den Steuerschalter 9 abgegeben, so daß auch keine Bestromung mehr durchgeschaltet wird und der Motor in Ruhe bleibt.

Auf eine nähere Beschreibung der Polwendeschaltung 14 ist verzichtet worden, weil sie zum bekannten Stand der Technik gehört. Die nicht näher bezeichneten Widerstände der Schaltungsanordnung dienen in bekannter Weise zur Spannungs- bzw. Pegelangleichung.

Die nachfolgende Tabelle gibt die Steuersignale wieder, die in der verschiedenen Betriebszuständen des Motors von der Steuerung 7 auf den beiden Ausgangsleitungen 12 und 13 abgegeben werden.

| Steuersignal auf leitung | | Betriebszustand |
|---|---|---|
| 12 | 13 | |
| O | L | Motor wird vorwärts bestrommt |
| L | O | Motor wird rückwärts bestromt |
| O | O | Regelung ist durch Steuersignal auf Leitung 26 eingeschaltet |

Da neben Motordrehungen über mehrere Sensorteilungen hinweg, deren Ablauf insbesendere in Verbindung mit Figur 1 beschrieben worden ist, auch Einzelschritte über nur eine Sensorteilung mit dem prinzipiell gleichen Regelverfahren möglich sein sollen, richtet sich die Dimensionierung der

4

Regelkurve, d. h. der die Regelspannung erzeugenden Bauelemente, nach der bei Ausführung nur eines einzelnen Schrittes erreichbaren Winkelgeschwindigkeit des Motors 1. Zweckmäßigerweise wird der Motor 1 in der gewünschten Drehrichtung bis zur Vollendung des halben Schrittes (oder nur wenig, etwa um die Zeitspanne des Einschaltens der Regelkurve, darüber) bestromt und damit beschleunigt, die Bestromung dann abgeschaltet und das Einlaufen in die Soll- und Ruheposition in der beschriebenen Weise entlang der Regelkurve durch die Spannungsvergleichsschaltung 8 gesteuert. Damit aber liegt die erforderliche Ausgangsgeschwindigkeit fest, bei der die Regelkurve wirkungsvoll zur Anwendung gebracht werden kann. Bei einer Motordrehung über mehrere Schritte hinweg muß daher nach Abbremsung durch entgegengesetzt Bestromung die vorbestimmte Grenzgeschwindigkeit ebenfalls die Größe der bei nur einem Schritt erreichbaren Ausgangsgeschwindigkeit haben.

Bei Motordrehunge über mehrere Schritte hinweg und Abbremsung nach ungefähr dem halben Weg kann es—abhängig von stark schwankenden Reibungsverhältnissen—sein, daß die vorbestimmte Grenzgeschwindigkeit zeitweise beträchtlich vor der Sollposition erreicht ist, Der Restweg bis zu deren Erreichen würde dann bei dem beschriebenen Verfahren unverhältnismäßig lange Zeit in Anspruch mehmen. Um hier Abhilfe zu schaffen, kann die Steuerung 7 so ausgelegt sein, daß die gegenläufige Bestromung bereits bei einer höheren als der vorbestimmten Grenzgeschwindigkeit unterbrochen wird, der Motor 1 durch kurze Vorwärts- und Rückwärts-impulse auf dieser Geschwindigkeit gehalten wird, bis ein fest vorgegebener Abstand vor der Sollposition erreicht ist, daß dann die gegenläufige Bestromung erneut angelegt wird, bis der Motor 1 die vorbestimmte Grenzgeschwindigkeit erreicht hat und schließlich eine halbe Schritteilung vor der Sollposition in beschriebener Weise die Regelspannun zur Wirkung begracht wird. Eine solche Unterteilung, die natürlich auch mehrere Geschwindigkeitsstufen umfassen kann, ermöglicht es, die Sollposition schneller zu erreichen.

Die Steuerung 7 erkennt in diesem Falle ebenfalls durch Vergleich des aus der Sensorspannung abgeleiteten Taktes mit dem steuerungs-internen Takt die Winkelgeschwindigkeit des Motors 1 und kann somit in Abhängigkeit von vorgegebenen Geschwindigkeitsschwellen zugeordnete Steuersignale an die Schaltungsanordnung geben. Desgleichen lassen sich durch Abwärtszählen des mit der Anzahl zurückzulegender Schritte gesetzten Zählers aus definierten Stellen im Zählerstand, die dem Restweg des Motors 1 bis zur Sollstellung entsprechen, zugeordnete Steuersignale ableiten.

Selbstverständlich können auch Teile der in Figur 2 dargestellten Schaltungsanordnung dadurch entfallen, daß ein die Steuerung 7 bildender Mikroprozessor deren Funktion mitübernimmt.

In Figur 3 ist im oberen Teil der Verlauf des vom Sensor 2 gelieferten wegproportionalen Sinussignales auf der Zeitachse dargestellt. Das im linken Bereich mit der Länge "a" bezeichnete Signal entspricht, wie auch das rechts mit der Länge "b" bezeichnete Signal, jeweils einem Motorschritt, d. h. einer Sensorteilung. Jedoch ist die Winkelgeschwindigkeit des Motors 1 bei "a" geringer als bei "b".

Der untere Teil der Figur 3 zeigt den aus der Sensorspannung abgeleiteten Takt, der der Steuerung 7 zugeführt und dort zur Kontrolle der Motorbewegung benötigt wird. Es ist ersichtlich, daß der Abstand der Taktsignale den Null-Durchgängen der Sensorspannung entspricht.

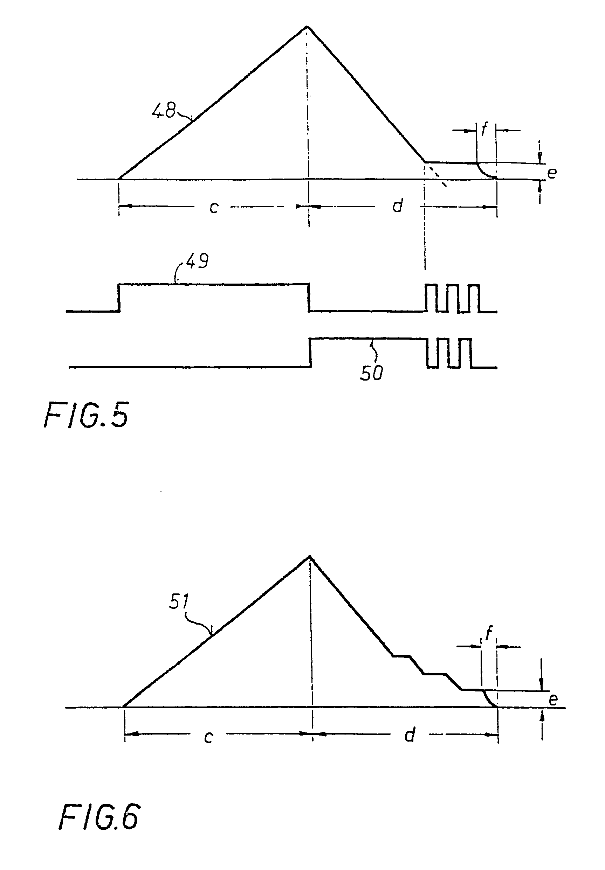

Figur 4 zeigt den Regelungsverlauf bei Ausführung nur eines einzigen Schrittes. Kurvenzug 46 zeigt die Einschaltzeit der Motorbestromung z. B. in Vorwärtsrichtung durch die Steuerung 7 auf Leitung 12. Kurvenzug 47 zeigt das Einschaltsignal für die Regelkurve, das von der Steuerung 7 auf Leitung 26 abgegeben wird. Mit erfolgter Einschaltung ist auch das Signal 46 auf Leitung 12 beendet. Im Kurvenzug 44 ist due aus dem Differenzierglied 6 kommende Summenspannung dargestelt, die in der Spannungs-Vergleichsschaltung 8 mit der heir ebenfalls gezeigten Regelspannung 45 verglichen wird. Vom Ausgang der Spannungs-Vergleichsschaltung 8 wird dann die Durchschaltung der Vorwärts- oder Rückwärtsbrestromung entsprechend der Differenz der beiden Spannungen veranlaßt, wodurch sich der Motor 1 mit der durch den rechten Teil der Kurve 44 gezeigten Bewegung entlang der Regelkurve in die Sollposition bewegt. Das Fenster "g" zeigt die durch die Widerstände 42, 43 festgelegte -Einstelltoleranz, innerhalb derer die Regelung abgeschaltet wird.

In Figure 5 ist der Geschwindigkeitsverlauf der Motors 1 bei Drehung über mehrere Schritte hinweg durch Kurvenzug 48 dargestellt. Hier stellen "c" und "d" jeweils den halben Winkelweg des Motors 1 dar. Kurvenzug 49 zeigt die Bestromung des Motors in Vorwärtsrichtung, während Kurvenzug 50 die Bestromung in Rückwärtsrichtung darstellt. Es ist zu sehen, daß die Beschleunigungsphase nach der ersten Weghälfte "c" abgeschaltet und die Bremsphase durch Rückwärtsbestromung eingeschaltet wird. Nach Erreichen der vorbestimmten Grenzgeschwindigkeit "e" wird die Bremsphase abgeschaltet, und kurze Impulse werden wechselweise in Vorwärts- und Rückwärtsrichtung angelegt, um den Motor auf dieser Geschwindigkeit zu halten. Bei Erreichen des Abstandes "f" von der Sollposition, der einem halben Sensorschritt entspricht, wird die Regelspannung, wie zu Figur 4 beschrieben, eingeschaltet.

Figur 6 zeigt einen dem Kurvenzug 48 in Figur 5 entsprechenden Verlauf 51, bei dem die Abbremsung des Motors 1 auf die vorbestimmte Grenzgeschwindigkeit stufenweise erfolgt. Die Einschaltung der Regelspannung wird auch hier einen halben Schritt vor der Sollstellung durch die Steuerung 7 veranlaßt.

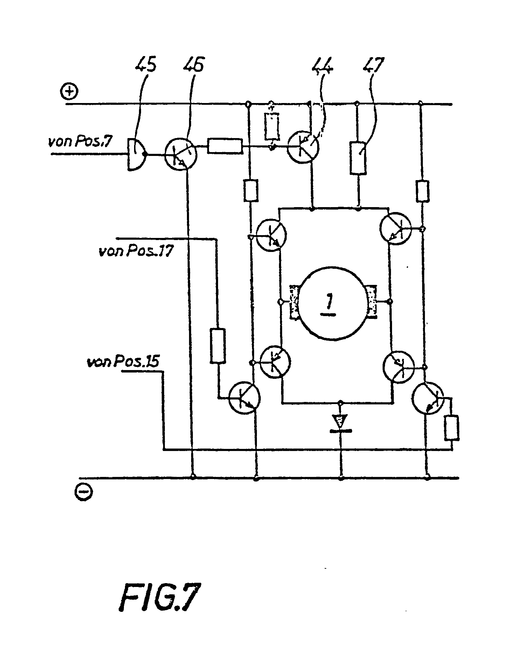

Um ein eventuelles Schwingverhalten um die Sollposition sicher auszuschalten, kann zusätzlich noch eine Schaltungsmaßnahme gemäß Figur 7 getroffen werden. Hierdurch kann der von der Polwendeschaltung 14 der Figur 2 an den Motor 1 durchschaltbare Betriebsstrom des Motors 1 auf ein Signal der Steuerung 7 hin reduziert werden. Während der Lauf- und Regelphase des Motors 1 wird der volle Betriebsstrom über den geöffneten pnp-Transistor 44 an die Polwendeschaltung angelegt, so daß Vorwärts- bzw. Rückwärtsbestromung der Motorwicklung mit vollem Betriebsstrom erfolgt. Wird in der beschriebenen Weise durch Anlegen des Einschaltsignals auf Leitung 26 (in Figur 2) die Regelspannung zur Wirkung bebracht und der Motor 1 entlang der Regelspannungs-Kurve zur Sollstellung geführt, so gelangt er nach einer bestimmten Zeit in den Bereich der Einstelltoleranz (Fenster "g" in Figur 4), innerhalb derer die Regelung wegen des Spannungsteilers 42, 43 nicht mehr zur Wirkung kommt. Mit Einschalten der Regelung wird in der Steuerung 7 eine feste Zeitdauer berücksichtigt, die so bemessen ist, daß sich der Motor 1 nach deren Ablauf im Bereich der Einstelltoleranz "g" befindet. Von der Steuerung 7 wird daraufhin ein Signal an den Inverter 45 angelegt, das bewirkt, daß der pnp-Transistor 44 über einen npn-Transistor 46 gesperrt wird. Über einen Widerstand 47 liegt nun eine reduzierte Spannung an der Polwendeschaltung, deren Größe von der Größe des Widerstandes 47 bestimmt wird.

Schwingt der Motor 1 etwa wegen seiner Massenträgheit oder derjenigen eines von ihm getriebenen Teiles über den Einstelltoleranzbereich "g" hinaus, so wird er mit dem reduzierten Betriebsstrom in den Einstelltoleranzbereich "g" zurückgebracht.

Weiterhin ist es denkbar, deß ein bestimmtes Maß an Elastizität in der Bauteilkette zwischen Motor 1 und einem getriebenen Teil auftritt. Das kann zur Folge haben, daß der Motor 1 durch die reduzierte Bestromung zwar über die Grenze des Einstelltoleranzbereiches "g" in den Einstelltoleranzbereich zurückgebracht wird, dann aber—da die Bestromung im Einstelltoleranzbereich unterdrückt ist—durch die Federwirkung der Elastizität wieder hinausschwingt. Um ein dadurch ausgelöstes Pendeln um eine Grenze des Einstelltoleranzbereiches zu unterbinden, wird von der Steuerung 7 die Begrenzung des Motor-Betriebsstromes durch kurzzeitige Änderung des Signals am Inverter 45 in fest vorgegebenen Zeitabständen aufgehoben. Der Motor 1 erhält dann—sollte er außerhalb der Grenze des Einstelltoleranzbereiches "g" stehen—einen kurzen Anstoß durch einen Impuls in voller Spannungsgröße, wodurch er von der Grenze weg in den Einstelltoleranzbereich "g" gestoßen wird.

**Patentansprüche**

1. Verfahren zur geregelten Führung eines Gleichstromantriebes in eine Zielposition, bei dem der zurückgelegte Weg gemessen und durch eine periodische Sensorspannung wiedergegeben wird, die Sensorspannung in pulsbreitenmodulierte Taktsignale umgeformt und mit digitalen Sollwerten für den Weg verglichen wird, das Vergleichsergebnis zur Durchschaltung des Betriebsstromes an den Antriebsmotor in Vorwärts- oder Rückwärtsrichtung ausgewertet wird und der Antrieb auf einem Restweg nach Maßgabe einer eine Führungsgröße bildenden Spannung in die Zielposition geführt wird, dadurch gekennzeichnet, daß

1. die Sensorspannung differenziert und die differenzierte Spannung zum proportionalen Anteil addiert wird, so daß eine Summenspannung mit PD-Verlauf entsteht,
2. sobalt der Weg vor der Zielposition einer Halbwelle der Sensorspannung entspricht und die Geschwindigkeit einen vorbestimmten Grenzwert nicht überschreitet eine Spannung mit abklingendem Verlauf ausgelöst wird, mit der die Summenspannung verglichen wird, und daß
3. die Durchschaltung des Betriebsstromes an den Antriebsmotor gemäß dem positiven oder negativen Vorzeichen einer Abweichung der Summenspannung von der Abklingenden Spannung in Vorwärts- oder Rückwärtsrichtung bis zum Unterschreiten einer Spannungstoleranzgrenze erfolgt, underhalb der die Durchschaltung des Betriebsstromes unterbunden wird.

2. Verfahren nach Anspruch 1, dadurch gekennzeichnet, daß bei einer höheren als der vorbestimmten Grenzgeschwindigkeit des Motors zunächst ein der Drehrichtung des Motors entgegenwirkender Betriebsstrom bis zum Erreichen der vorbestimmten Grenzgeschwindigkeit durchgeschaltet wird, daß dann im Falle eines größeren als des durch die letzte Halbwelle des Sensor-Spannungs-signals festgelegten Abstandes von der Zielposition durch bedarfsweises Nichtdurchschalten oder Durchschalten des Betriebsstromes für Vorwärtsdrehung und Rückwärtsdrehung die vorbestimmte Grenzgeschwindigkeit bis zur letzten Halbwell aufrecht erhalten wird.

3. Verfahren nach Anspruch 2, dadurch gekennzeichnet, daß bei einer höheren als der vorbestimmten Grenzgeschwindigkeit des Motors ein stufenweises Durchschalten des entgegenwirkenden Betriebsstromes bis auf die vorbestimmte Grenzgeschwindigkeit in der Weise erfolgt, daß die Durchschaltung vor Erreichen der vorbestimmten Grenzgeschwindigkeit ein- oder mehrmals unterbrochen wird.

4. Verfahren nach Anspruch 3, dadurch gekennzeichnet, daß bei stufenweisem Durchschalten des entgegenwirkenden Betriebsstromes die bei Unterbrechung der Durchschaltung jeweils erreichte Geschindigkeit durch bedarfsweises Nichtdurchschalten oder Durchschalten des Betribesstromes für Vorwärtsdrehung und Rückwärtsdrehung bis zu einem vorgegebenen Abstand von der Zielposition aufrecht erhalten wird.

5. Verfahren nach einem der Ansprüche 1 bis 4, dadurch gekennzeichnet, daß ein Toleranzbereich für die Zielposition vorgegeben ist, innerhalb dessen die Regelung unterdrückt wird.

6. Schaltungsanordnung zur Durchführung des Verfahrens nach einem oder mehreren der vorhergehenden Ansprüche, dadurch gekennzeichnet, daß das vom Sensor (2) gelieferte Spannungssignal einer digitalen Steuerung (7) für eine Überwachung des zu durchlaufenden Weges des Motors (1) bis zur jeweiligen Zielposition und seiner Winkelgeschwindigkeit zuführbar ist, daß ein Steuerschalter (9) vorgesehen ist, dem von der Steuerung (7) Befehlssignale zur Durchschaltung oder Nichtdurchschaltung des Betriebsstromes an den Motor (1) für Vorwärtsdrehrichtung und Rückwärtsdrehrichtung zuführbar sind, daß die vom Sensor (2) gelieferten Spannungssignale einem Differenzierglied (6) zur Differenzierung und Addition zu einem proportionalen Anteil des Spannungssignals zuführbar sind, daß eine von der Steuerung (7) einschaltbare und in der der Motordrehrichtung entsprechenden Wirkungsrichtung zur Wirkung bringbare Schaltung (11) zur Erzeugung einer Regelspannung vorgesehen ist, deren Ausgang (25) sowie der Ausgang (24) des Differenzierspannung des (6) einer Vergleichsschaltung (8) zuführbar ist und daß der Ausgang (40, 41) der Vergleichsschaltung (8) dem Steuerschalter (9) zur Durchschaltung des Betriebsstromes für Vorwärts- oder Rückwärtsdrehrichtung an den Motor (1) in Abhängigkeit von einem positiven oder negativen Vergleichsergebnis zuführbar ist.

7. Schaltungsanordnung nach Anspruch 6, dadurch gekennzeichnet, daß zur Erzeugung der Regelspannung für die beiden Drehrichtungen des Motors (1) je eine mit einem an positivem bzw. negativem Potential liegenden Kondensator (30, 34) verbundene Parallelschaltung aus Widerstand (31, 35) und Diode (32, 36) vorgesehen ist, die über Gatterschaltungen (27, 29, 28) mit den Ausgängen (12, 13, 26) der digitalen Steuerung (7) für Drehrichtungs- und Einschaltsginale verbunden sind, und daß die Ausgänge der beiden Schaltungen über Entkopplungsdioden (33, 37) einem gemeinsamen Eingang (25) der Vergleichsschaltung (8) zuführbar sind.

8. Schaltungsanordnung nach einem der Ansprüche 6 oder 7, dadurch gekennzeichnet, daß die mit dem Ausgang (25) der Schaltung (11) zur Erzeugung der Regelspannung verbundenen Eingänge der Operationsverstärker (38, 39) über je einen Widerstand (42, 43) mit positivem bzw. negativem Potential zur Unterdrückung der Regelung innerhalb eines vorgegebenen Toleranzbereiches verbunden sind.

9. Schaltungsanordung nach einem der Ansprüche 6 bis 8, dadurch gekennzeichnet, daß dem Motor (1) eine Polwendeschaltung (14) vorgeschaltet sit, von der der Motor-Betriebsstrom entsprechend der befohlenen Drehrichtung durchschaltbar ist, daß der Polwendeschaltung (14) der Betriebsstrom über die Emitter-Kollektor-Strecke eines Transistors (44) und über einen dazu parallel angeordneten Widerstand (47) zuführbar ist und daß der während der Lauf- und Regelphase geöffnete Transistor (44) von der Steuerung (7) nach Ablauf einer fest vorgegebenen Zeitdauer nach Einschalten der Regelspannung, die so bemessen ist, daß der Motor (1) in den Toleranzbereich der Zielposition eingelaufen ist, gesperrt wird.

**Revendications**

1. Procédé pour la commande réglée d'un entraînement à courant continu jusque dans une position de destination, dans lequel la course parcourue est mesurée et est reproduite par une tension périodique de détection qui est convertie en signaux d'horloge modulés en largeur d'impulsion et qui est comparée avec des valeurs numériques de consigne de la course, où le résultat de comparaison est analysé pour l'application du courant de service au moteur d'entraînement dans le sens de marche avant ou de marche arrière et où l'entraînement est commandé sur une course résiduelle jusque dans la position de destination après application d'une tension constituant une grandeur de commande, caractérisé en ce que:

1. la tension de détecteur est différenciée et la tension différenciée est additionnée à une fraction proportionnelle de manière à obtenir une tension de sommation avec un profil PD,
2. aussitôt que la course avant la position de destination correspond à une demi-onde de la tension de détecteur et aussitôt que la vitesse ne dépasse pas une valeur limite prédéterminée, une tension de profil décroissant est déclenchée et est comparée avec la tension de sommation, et en ce que
3. l'application du courant de service au moteur d'entraînement est effectuée en concordance avec le signe positif ou négatif d'un écart de la tension de sommation par rapport à la tension décroissante dans le sens de marche avant ou de marche arrière jusqu'à un dépassement par défaut d'une limite de tolérance de tension, en-dessous de laquelle l'application du courant de service est interdite.

2. Procédé selon la revendication 1, caractérisé en ce que, dans le cas d'une vitesse de moteur qui est supérieure à la valeur limite prédéterminée, initialement un courant de service agissant en sens opposé à la direction de rotation du moteur est appliqué jusqu'à ce qu'on atteigne la vitesse limite prédéterminée, en ce qu'ensuite, dans le cas d'un espacement par rapport à la position de destination qui est supérieur à ce qui est défini par la dernière demi onde du signal de tension de détecteur, la vitesse limite prédéterminée est maintenue jusqu'à la dernière demi-onde par une non-application ou

# O 014 241

bien par une application, suivant ce qui est nécessaire, du courant de service pour la direction de marche avant et pour la direction de marche arrière.

3. Procédé selon la revendication 2, caractérisé en ce que, dans le cas d'une vitesse du moteur qui est supérieure à la valeur limite prédéterminée, on effectue une application échelonnée du courant de service à effet antagoniste jusqu'à la vitesse limite prédéterminée de manière que l'alimentation en courant soit interrompue une ou plusieurs fois avant que la vitesse limite prédéterminée ne soit atteinte.

4. Procédé selon la revendication 3, caractérisé en ce que, dans le cas d'une alimentation échelonnée du courant de service à effet antagoniste, la vitesse respectivement atteinte lors d'une interruption de l'alimentation en courant est manitenue, jusqu'à un espacement prédéterminé par rapport à la position de destination, respectivement par une non-alimentation ou bien une alimentation en courant de service, suivant ce qui est nécessaire, pour une rotation en marche avant et une rotation en marche arrière.

5. Procédé selon l'une des revendications 1 à 4, caractérisé en ce qu'on prédétermine une plage de tolérance pour la position de destination, à l'intérieur de laquelle la régulation est supprimée.

6. Agencement de circuits pour la mise en oeuvre du procédé selon l'une quelconque des revendications 1 à 5, caractérisé en ce que le signal de tension fourni par un détecteur (2) peur être appliqué à une commande numérique (7) pour un contrôle de la course à parcourir par le moteur (1) jusque dans la position de destination correspondante et de sa vitesse angulaire, en ce qu'il est prévu commutateur de commande (9), qui peut recevoir des signaux d'ordre provenant de la commande (7) pour l'application ou la non-application du courant de service au moteur (1) pour une direction de rotation vers l'avant et une direction de rotation vers l'arrière, en ce que les signaux de tension fournis par le détecteur (2) peuvent être appliqués à un organe de de différenciation pour une différenciation et une addition avec une fraction proportionnelle du signal de tension, en ce qu'il est prévu un circuit de génération (11) d'une tension de régulation pouvant être enclenché par la commande (7) et pouvant être actionné dans la direction de fonction correspondant à la direction de rotation du moteur, le signal de sortie (25) de ce circuit et le signal de sortie (24) de l'organe de différenciation (6) pouvant être appliqués à un circuit de comparaison (8), et en ce que le signal de sortie (40, 41) du circuit de comparaison (8) peut être appliqué au commutateur de commande (9) pour l'application du courant de service pour la direction de marche avant ou de marche arrière au moteur (1) en fonction d'un résultat positif ou d'un résultat négatif de la comparaison.

7. Agencement de circuits selon la revendication 6, caractérisé en ce que, pour produire la tension de régulation pour les deux sens de rotation du moteur (1), il est prévu respectivement un circuit parallèle se composant d'une résistance (31, 35) et d'une diode (32, 36), relié à un condensateur (30, 34) et un potentiel positif ou négatif, lesdits circuits étant reliés par l'intermédiaire de circuits à portes (27, 29, 28) aux sorties (12, 13, 26) de signaux d'enclenchement et de sens de rotation de la commande numérique (7), et en ce que les signaux de sortie des deux circuit peuvent être appliqués par l'intermédiaire de diodes de découplage (33, 37), à une entrée commune (25) du circuit de comparaison (8).

8. Agencement de circuits selon l'une des revendications 6 ou 7, caractérisé en ce que les entrées des amplificateurs opérationnels (38, 39) qui sont reliées à la sortie (25) du circuit (11) de génération de la tension de régulation sont respectivement connectées, par l'intermédiaire d'une résistance (42, 43) soumise à un potentiel positif ou négatif, en vue d'empêcher la régulation à l'intérieur d'une plage de tolérance prédéterminée.

9. Agencement de circuits selon l'une des revendications 6 à 8, caractérisé en ce qu'il est prévu en amont du moteur (1) un circuit de commutation (14) par lequel le courant de service du moteur peut passer en fonction de la direction de rotation imposée, en ce que le circuit de commutation (14) reçoit le courant de service par l'intermédiaire de la voie émetteur-collecteur d'un transistor (44) et par l'intermédiaire d'une résistance (47) branchée en parallèle et en ce que le transistor (44), ouvert pendant la phase de fonctionnement et de régulation est bloqué par la commande (7), au bout d'un intervalle de durée fixe et prédéterminée, après enchlechement de la tension de régulation qui est calibrée de telle sorte que le moteur (1) parvienne dans la position de destination dals la plage de tolérance.

## Claims

1. A method for the controlled guiding of a direct-current drive into a target position, wherein the distance covered is measured and represented by a periodic sensor voltage, the sensor voltage is converted into pulse-width-modulated timing signals and is compared with digital desired values for the distance, the result of the comparison is utilized to switch through the operating current at the drive motor in the forwards and backwards direction and the drive is guided into the target position over a residual distance according to a voltage forming a guide quantity, characterised in that

1. the sensor voltage is differentiated and the differentiated voltage is added to the proportional component so that a sum voltage with a PD curve results,

8

2. as soon as the distance before the target position corresponds to a half wave of the sensor voltage and the speed does not exceed a predetermined limiting value, a voltage with a decaying curve is released with which the sum voltage is compared, and that

3. the switching through of the operating current at the drive motor is effected in accordance with the positive or negative sign of a deviation of the sum voltage from the decaying voltage in the forward or backward direction until there is a drop below a voltage tolerance limit, below which the switching through of the operating current is prevented.

2. A method as claimed in claim 1, characterised in that in the event of a speed of the motor higher than the predetermined limiting speed, first an operating current counteracting the direction of rotation of the motor is switched through until the predetermined limiting speed is reached, and that then, in the event of a distance from the target position being determined which is greater than that determined by the last half wave of the sensor voltage signal, the predetermined limiting speed is maintained up to the last half wave by not switching through or switching through the operating current for forward rotation and backward rotation as necessary.

3. A method as claimed in claim 2, characterised in that in the event of a speed of the motor higher than the predetermined limiting speed, a step-by-step switching thgough of the counteracting operating current is effected up to the predetermined limiting speed in such a manner that the switching through is interrupted one or more times before reaching the predetermined limiting speed.

4. A method as claimed in claim 3, characterised in that during step-by-step switching through of the counteracting operating current, the speed reached in each case on interruption of the switching through is maintained up to a predetermined distance from the target position by not switching through or switching through the operating current for forward rotation and backward rotation as necessary.

5. A method as claimed in any one of claims 1 to 4, characterised in that a tolerance range is preset for the target position, inside which the control is suppressed.

6. A circuit arrangement for carrying out the method as claimed in one or more of the preceding claims, characterised in that the voltage signal delivered by the sensor is able to be supplied to a digital control (7) for monitoring the distance to be travelled by the motor (1) up to the particular target position and its angular velocity, that a control switch (9) is provided to which instruction signals for switching through or not switching through the operating current to the motor (1) for forward direction of rotation and backward direction of rotation can be supplied from the control (7), that the voltage signals supplied by the sensor (2) can be supplied to a differentiating network (6) for the differentiation and addition to a proportional component of the voltage signal, that a circuit (11), which can be switched on by the control (7) and which can be brought into action in the direction of action corresponding to the direction of rotation of the motor, is provided to produce a control voltage, its output (25) and the output (24) of the differentiating network (6) being able to be supplied to a comparison circuit (8), and that the output (40, 41) of the comparison circuit (8) is able to be supplied to the control switch (9) for switching through the operating current for forward or backward direction of rotation at the motor (1) depending on a positive or negative result of the comparison.

7. A circuit arrangement as claimed in claim 6, characterised in that parallel connections of resistors (31, 35) and diodes (32, 36), each with a capacitor (30, 34) connected to positive or negative potential, are provided to produce the control voltage for each of the two directions of rotation of the motor (1) and are connected through gate circuits (27, 29, 28) to the outputs (12, 13, 26) of the digital control (7) for signals for direction of rotation and switching on, and that the outputs of the two circuits are able to be supplied through decoupling diodes (33, 37), to a common input (25) of the comparison circuit (8).

8. A circuit arrangement as claimed in claim 6 or 7, characterised in that the inputs of the operational amplifiers (38, 39) connected to the output (25) of the circuit (11) to produce the control voltage are each connected, through a resistor (42, 43), to positive or negative potential to suppress the control within a predetermined tolerance range.

9. A circuit arrangement as claimed in any one of claims 6 to 8, characterised in that the motor (1) is preceded by a polarity reversing circuit (14) by which the motor operating current is able to be switched through according to the direction of rotation ordered, that the polarity reversing circuit (14) is supplied with the operating current via the emitter-collector path of a transistor (44) and via a resistor (47) connected in parallel thereto and that the transistor (44) which is opened during the running and control phase is blocked by the control (7) after the expiration of a fixed predetermined period of time after switching on the control voltage which period of time is selected so that the motor (1) has run into the tolerance range of the target position.

FIG.1

FIG.2

FIG.3

FIG.4

FIG.5

FIG.6

4

FIG.7